(19) **Europäisches Patentamt**
**European Patent Office**
**Office européen des brevets**

(11) **EP 4 064 087 B1**

(12) **FASCICULE DE BREVET EUROPEEN**

(45) Date de publication et mention
de la délivrance du brevet:
**17.09.2025 Bulletin 2025/38**

(51) Classification Internationale des Brevets (IPC):
**G06F 11/3604** (2025.01) **G06F 21/55** (2013.01)
**G06F 21/57** (2013.01)

(21) Numéro de dépôt: **22163858.8**

(22) Date de dépôt: **23.03.2022**

(52) Classification Coopérative des Brevets (CPC):
**G06F 21/556; G06F 11/3608; G06F 21/554;
G06F 21/577**

(54) **PROCÉDÉ ET DISPOSITIF ÉLECTRONIQUE DE SURVEILLANCE D'UN CODE EXÉCUTABLE APTE À ÊTRE EXÉCUTÉ SUR UNE PLATEFORME INFORMATIQUE, ET PROGRAMME D'ORDINATEUR METTANT EN OEUVRE UN TEL PROCÉDÉ**

VERFAHREN UND ELEKTRONISCHE VORRICHTUNG ZUR ÜBERWACHUNG EINES AUSFÜHRBAREN CODES, DER ZUR AUSFÜHRUNG AUF EINER COMPUTERPLATTFORM GEEIGNET IST, UND COMPUTERPROGRAMM, DAS EIN SOLCHES VERFAHREN UMSETZT

ELECTRONIC DEVICE AND METHOD FOR MONITORING AN EXECUTABLE CODE CAPABLE OF BEING RUN ON A COMPUTER PLATFORM, AND COMPUTER PROGRAM IMPLEMENTING SUCH A METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.03.2021 FR 2103046**

(43) Date de publication de la demande:
**28.09.2022 Bulletin 2022/39**

(73) Titulaire: **Commissariat à l'Energie Atomique et
aux Energies
Alternatives
75015 Paris (FR)**

(72) Inventeurs:
• **ASAVOAE, MIHAIL**
**91191 GIF SUR YVETTE CEDEX (FR)**
• **JAN, Mathieu**
**91191 GIF SUR YVETTE CEDEX (FR)**

(74) Mandataire: **Lavoix
2, place d'Estienne d'Orves
75441 Paris Cedex 09 (FR)**

(56) Documents cités:
• **LU SIXING ET AL: "Data-driven Anomaly
Detection with Timing Features for Embedded
Systems", vol. 24, no. 3, 1 June 2019
(2019-06-01), US, pages 1 - 27, XP055866943,
ISSN: 1084-4309, Retrieved from the Internet
<URL:https://dl.acm.org/doi/pdf/10.1145/
3279949> [retrieved on 20211129], DOI: 10.1145/
3279949**
• **ARAVINDH ANANTARAMAN ET AL: "Virtual
simple architecture (VISA): exceeding the
complexity limit in safe real-time systems",
PROCEEDINGS OF THE 30TH. INTERNATIONAL
SYMPOSIUM ON COMPUTER ARCHITECTURE.
ISCA 2003. SAN DIEGO, CA, JUNE 9 - 11, 2003;
[INTERNATIONAL SYMPOSIUM ON COMPUTER
ARCHITECTURE.(ISCA)], LOS ALAMITOS, CA :
IEEE COMP. SOC, US, 9 June 2003 (2003-06-09),
pages 350 - 361, XP010796942, ISBN:
978-0-7695-1945-6, DOI: 10.1109/
ISCA.2003.1207013**
• **GABOW HAROLD N: "An efficient reduction
technique for degree-constrained subgraph and
bidirected network flow problems",
PROCEEDINGS OF THE SEVENTH SYMPOSIUM
ON DATA COMMUNICATIONS, ACMPUB27, NEW
YORK, NY, USA, 1 December 1983 (1983-12-01),
pages 448 - 456, XP058567224, ISBN:
978-1-4503-7457-6, DOI: 10.1145/800061.808776**

**Description**

La présente invention concerne un procédé de surveillance d'un code exécutable apte à être exécuté sur une plateforme informatique, le code exécutable comportant une séquence d'instructions logicielles, le procédé étant mis en œuvre par un dispositif électronique de surveillance.

L'invention concerne aussi un programme d'ordinateur comportant des instructions logicielles qui, lorsqu'elles sont exécutées par un ordinateur, mettent en œuvre un tel procédé de surveillance.

L'invention concerne également un tel dispositif électronique de surveillance d'un code exécutable apte à être exécuté sur une plateforme informatique.

L'invention concerne le domaine de la surveillance de codes exécutables comportant des séquences d'instructions logicielles aptes à être exécutés sur des plateformes informatiques, en particulier la surveillance de l'exécution de séquences d'instructions exprimées en langage machine, directement interprétables par la plateforme informatique.

L'article "Formal Executable Models for Automatic Detection of Timing Anomalies" de M. Asavoae, B. Ben Hedia et M. Jan, WCET 2018, enseigne qu'une anomalie temporelle (de l'anglais *timing anomaly*) d'une séquence d'instructions est un comportement temporel contre-intuitif de cette séquence dans le sens où une exécution rapide locale ralentit une exécution globale. La présence de tels comportements est gênante pour une analyse de temps d'exécution de pire cas, ou analyse WCET (de l'anglais *Worst Case Execution Time*), qui nécessite une certaine monotonie dans l'ordre d'exécution des instructions, pour pouvoir calculer ensuite des valeurs limites sûres.

Cependant, cet article n'enseigne pas comment détecter automatiquement des anomalies temporelles dans des conceptions d'architecture informatique données, en particulier dans des séquences données d'instructions en langage machine.

Les documents "Data-driven Anomaly Detection with Timing Features for Embedded Systems" de Lu et al, "Virtual simple architecture (VISA): exceeding the complexity limit in safe real-time systems" de Anantaraman et al, et "An efficient reduction technique for degree-constrained subgraph and bidirected network flow problems" de H. Gabow, concernent l'arrière-plan technologique de l'invention.

Le but de l'invention est alors de proposer un procédé, et un dispositif électronique associé, de surveillance d'un code exécutable comportant une séquence d'instructions logicielles, apte à être exécuté sur une plateforme informatique, permettant de détecter automatiquement des anomalies temporelles.

A cet effet, l'invention a pour objet un procédé de surveillance d'un code exécutable apte à être exécuté sur une plateforme informatique, selon la revendication 1.

Suivant d'autres aspects avantageux de l'invention, le procédé de surveillance est selon l'une quelconque des revendications 2 à 12.

L'invention a aussi pour objet un programme d'ordinateur selon la revendication 13.

L'invention a également pour objet un dispositif électronique de surveillance d'un code exécutable apte à être exécuté sur une plateforme informatique, selon la revendication 14.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'une plateforme informatique apte à exécuter un code exécutable, et un dispositif électronique de surveillance dudit code exécutable ;
- la figure 2 est une illustration d'un exemple d'un graphe acyclique orienté représentant une séquence d'instructions logicielles formant le code exécutable surveillé par le dispositif de surveillance de la figure 1 ;
- la figure 3 est une représentation schématique d'une propagation de données de quantification temporelle d'une chaine critique d'instructions à la suivante ;
- la figure 4 est une représentation schématique de quatre chronogrammes d'exécution d'une séquence de quatre instructions A à D, lors de différentes exécutions par la plateforme de la figure 1, comportant deux unités d'exécution en parallèle, le quatrième chronogramme correspondant à une anomalie temporelle ; et
- la figure 5 est un organigramme d'un procédé selon l'invention de surveillance d'un code exécutable comportant une séquence d'instructions logicielles, le procédé étant mis en œuvre par le dispositif électronique de surveillance de la figure 1.

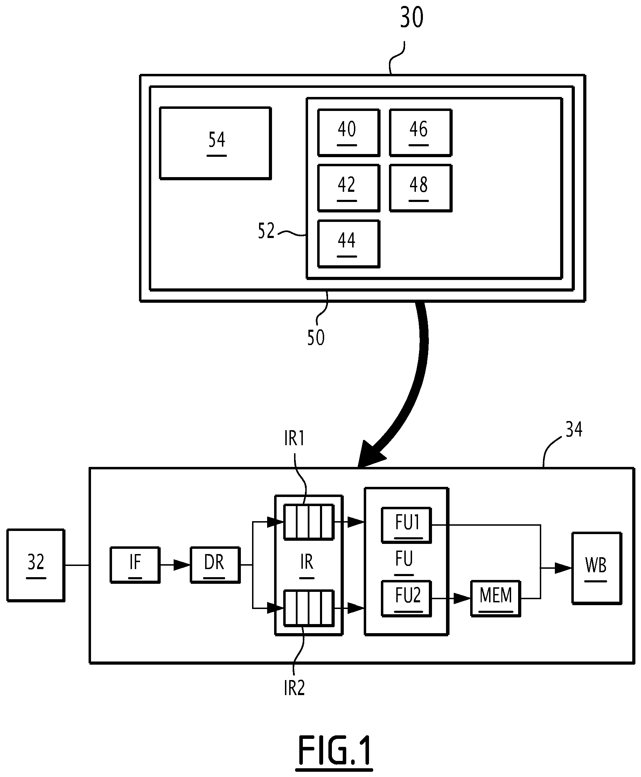

Sur la figure 1, un dispositif électronique de surveillance 30 est configuré pour surveiller un code exécutable 32 apte à être exécuté sur une plateforme informatique 34, le code exécutable 32 comportant une séquence d'instructions logicielles.

Le dispositif électronique de surveillance 30 comprend un module 40 d'acquisition de la séquence d'instructions logicielles formant le code exécutable 32 à surveiller ; un module 42 de génération d'une première structure de modélisation d'un chemin d'exécution de la séquence d'instructions ; un module 44 de calcul d'une deuxième structure de modélisation d'un fonctionnement de la séquence d'instructions ; et un module 46 de recherche d'une ou plusieurs anomalies temporelles à partir de chaine(s) critique(s) d'instructions déterminée(s) via la deuxième structure de modélisation.

En complément facultatif, le dispositif électronique de surveillance 30 comprend un module 48 de propagation de données de quantification temporelle d'une chaine critique d'instructions à la suivante.

Dans l'exemple de la figure 1, le dispositif électronique de surveillance 30 comprend une unité de traitement d'informations 50 formée par exemple d'une mémoire 52 et d'un processeur 54 associé à la mémoire 52.

Le code exécutable 32 comporte la séquence d'instructions logicielles, et la séquence d'instructions logicielles est par exemple une séquence d'instructions exprimées en langage machine, directement interprétables par la plateforme informatique 34.

La plateforme informatique 34 comporte typiquement plusieurs unités d'exécution d'instructions, telles qu'une première unité d'exécution d'instructions, également appelée première unité fonctionnelle FU1, et une deuxième unité d'exécution d'instructions, également appelée deuxième unité fonctionnelle FU2.

Dans l'exemple de la figure 1, la plateforme informatique 34 présente une architecture en pipeline, ou encore en cascade. Dans cet exemple de la figure 1, la plateforme informatique 34 comporte six étages successifs ; à savoir un premier étage de lecture d'instructions IF (de l'anglais *Instruction Fetch*) ; un deuxième étage de décodage et ré-ordonnancement d'instructions DR (de l'anglais *Decode Reorder*) connecté en sortie du premier étage de lecture d'instructions IF ; un troisième étage de registre d'instructions IR (de l'anglais *Instruction Register*), connecté en sortie du deuxième étage DR ; un quatrième étage d'exécution d'instructions FU (de l'anglais *Functional Unit*), comportant les première et deuxième unités fonctionnelles FU1, FU2 et connecté en sortie du troisième étage de registre d'instructions IR ; un cinquième étage d'accès à la mémoire MEM (de l'anglais *MEMory access*), cet étage étant utile seulement pour l'exécution d'instructions de chargement et de rangement, et étant par exemple connecté seulement en sortie de la deuxième unité fonctionnelle FU2 dans l'exemple de la figure 1 ; et un sixième étage de rangement du résultat WB (de l'anglais *Write Back*), le sixième étage étant connecté en sortie d'une part de la première unité fonctionnelle FU1, et d'autre part du cinquième étage d'accès à la mémoire MEM, lui-même connecté en sortie de la deuxième unité fonctionnelle FU2.

Le premier étage de lecture d'instructions IF est connu en soi, et est propre à recevoir, puis à lire successivement chacune des instructions de la séquence d'instructions formant le code exécutable 32 destiné à être exécuté par la plateforme informatique 34.

Le deuxième étage de décodage et ré-ordonnancement DR est également connu en soi, et est apte à préparer les arguments de l'instruction en vue de l'exécution ultérieure de l'instruction par l'une des unités fonctionnelles FU1, FU2.

Le troisième étage de registre d'instructions IR comporte typiquement un registre d'instructions pour chaque unité fonctionnelle du quatrième étage d'exécution .Dans l'exemple de la figure 1, le troisième étage IR comporte alors deux registres d'instructions, à savoir un premier registre d'instructions IR1 associé à la première unité d'exécution FU1 et connecté en entrée de celle-ci, et un deuxième registre d'instructions IR2 associé à la deuxième unité d'exécution d'instructions FU2 et connecté en entrée de celle-ci.

La première unité d'exécution FU1 est typiquement adaptée pour exécuter des instructions arithmétique et logique, également appelées instructions ALU (de l'anglais *Arithmetical and Logical Unit*), ou encore des instructions de branchement et de saut (de l'anglais *branch* et *jump*), et la deuxième unité d'exécution FU2 est par exemple adaptée pour exécuter des instructions de chargement et de rangement (de l'anglais *load* et *store*), la deuxième unité d'exécution FU2 étant alors reliée à cet effet en entrée de l'étage d'accès à la mémoire MEM.

L'étage d'accès à la mémoire MEM est seulement utile pour les instructions de chargement et de rangement, et comme connu en soi permet de lire dans le registre concerné la valeur à ranger dans le cas d'une instruction de rangement, ou encore de mettre dans le registre concerné la valeur lue en mémoire dans le cas d'une instruction de chargement.

L'étage de rangement du résultat WB est enfin adapté pour ranger, dans le registre de destination, le résultat de l'exécution de l'instruction logicielle correspondante, par exemple pour ranger le résultat d'opérations arithmétiques et logiques effectuées par la première unité d'exécution FU1, ou encore pour ranger dans le registre de destination la valeur lue en mémoire par les instructions de chargement, ou encore une nouvelle adresse dans le cas d'instructions de branchement.

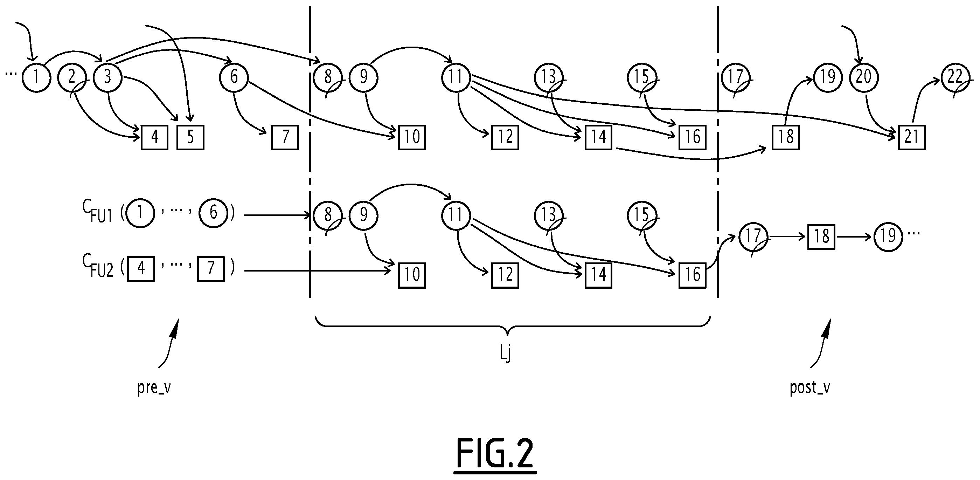

La séquence d'instructions logicielles est une succession d'instructions logicielles aptes à être exécutées successivement par la plateforme informatique 34. Dans l'exemple de la figure 2, la séquence d'instructions logicielles comporte vingt-deux instructions logicielles numérotées de 1 à 22, les instructions logicielles aptes à être exécutées par la première unité d'exécution FU1 étant représentées de manière circulaire, et les instructions logicielles aptes à être exécutées par la deuxième unité d'exécution FU2 étant représentées de manière rectangulaire. Les instructions aptes à être exécutées par la première unité d'exécution FU1 sont typiquement des instructions de type ALU, représentées sous forme d'un cercle à la figure 2, ou encore des instructions de branchement et de saut, représentées sous la forme d'un cercle entrecoupé d'un arc de cercle en partie inférieure droite sur la figure 2. Les instructions logicielles aptes à être exécutées par la deuxième unité d'exécution FU2 sont typiquement des instructions d'accès mémoire, telles que des instructions de chargement et de rangement, représentées sous la forme d'un rectangle à la figure 2.

Les instructions logicielles représentées à la figure 2 correspondent alors par exemple aux instructions listées ci-après.

| | | | |
|---|---|---|---|
| 1. | jr ra | | FU1 |
| 2. | jal ra, -56 | | FU1 |
| 3. | addi sp, -32 | | FU1 |
| 4. | sdsp ra, 24(sp) | | FU2 |
| 5. | sdsp s0, 16(sp) | | FU2 |
| 6. | addi4spn s0, sp, 32 | | FU1 |
| 7. | sw zero -20(s0) | | FU2 |
| 8. | jal ra, -256 | | FU1 |
| 9. | addi sp, -32 | | FU1 |
| 10. | sdsp s0, 23(sp) | | FU2 |
| 11. | addi4spn s0, sp, 32 | | FU1 |
| 12. | sw zero, -20(s0) | | FU2 |
| 13. | li a5, -1 | | FU1 |
| 14. | sw a5, -24(s0) | | FU2 |
| 15. | li a5. -1 | | FU1 |
| 16. | sw a5, -28(s0) | | FU2 |
| 17. | j 62 | | FU1 |
| 18. | lw a5, -24(s0) | | FU2 |
| 19. | addiw a5, 0 | | FU1 |
| 20. | bnez a5, -66 | | FU1 |
| 21. | lw a4, -20(s0) | | FU2 |
| 22. | slli a4, 2 | | FU1 |

L'homme du métier observera que les instructions listées ci-dessus sont alors des instructions exprimées en langage machine, directement interprétables par la plateforme informatique 34. Les instructions listées ci-dessus sont en l'occurrence et comme connu en soi des instructions de type RISC-V.

L'homme du métier observera que dans l'exemple ci-dessus, les instructions jr, jal, j et bnez sont des instructions de branchement et de saut, aptes à être exécutées par la première unité d'exécution FU1 ; les instructions addi, li, addiw, slli et addi4spn sont des instructions de type ALU, aptes à être exécutées par la première unité d'exécution FU1 ; et que les instructions sdsp, sw et lw sont des instructions de chargement ou de rangement, aptes à être exécutées par la deuxième unité d'exécution FU2.

Dans l'exemple de la figure 2, les relations entre instructions logicielles sont représentées sous forme de flèches, ou encore sous forme d'arcs orientés, étant observé que les relations entre deux instructions logicielles successives ne sont pas nécessairement représentées par souci de simplification du dessin.

Dans l'exemple de la figure 1, le module d'acquisition 40, le module de génération 42, le module de calcul 44 et le module de recherche 46, ainsi qu'en complément facultatif le module de propagation 48, sont réalisés chacun sous la forme d'un logiciel, d'une brique logicielle, exécutables par le processeur 54. La mémoire 52 du dispositif électronique de surveillance 30 est alors apte à stocker un logiciel d'acquisition de la séquence d'instructions logicielles formant le code exécutable à surveiller ; un logiciel de génération de la première structure de modélisation du chemin d'exécution de la séquence d'instructions ; un logiciel de calcul de la deuxième structure de modélisation du fonctionnement de la séquence d'instructions ; et un logiciel de recherche d'anomalie(s) temporelle(s) à partir de chaine(s) critique(s) d'instructions déterminée(s) via la deuxième structure de modélisation. En complément facultatif, la mémoire 52 du dispositif électronique de surveillance 30 est apte à stocker un logiciel de propagation de données de quantification temporelle d'une chaine critique respective d'instructions à la suivante. Le processeur 54 est alors apte à exécuter chacun des logiciels parmi le logiciel d'acquisition, le logiciel de génération, le logiciel de calcul et le logiciel de recherche, ainsi qu'en complément facultatif le logiciel de propagation.

En variante non représentée, le module d'acquisition 40, le module de génération 42, le module de calcul 44 et le module de recherche 46, ainsi qu'en complément facultatif le module de propagation 48, sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*).

Lorsque le dispositif électronique de surveillance 30 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comprenant des instructions logicielles.

Le module d'acquisition 40 est configuré pour acquérir la séquence d'instructions logicielles formant le code exécutable 32. La séquence d'instructions logicielles acquise est typiquement une séquence d'instructions exprimées en langage machine, directement interprétables par la plateforme informatique 34.

Le module de génération 42 est configuré pour générer la première structure de modélisation du chemin d'exécution de la séquence d'instructions, la première structure étant générée à partir de la séquence d'instructions acquise par le module d'acquisition 40 et comportant une pluralité de premiers groupes de données, chacun étant associé à une instruction logicielle respective.

Chaque premier groupe associé à une instruction logicielle respective comporte un identifiant d'une instruction logicielle précédente de ladite instruction respective et un identifiant d'une instruction logicielle suivante de ladite instruction respective, au sein de la séquence d'instructions formant le code exécutable 32.

Pour la génération de la première structure de modélisation, le module de génération 42 est par exemple configuré pour parcourir un chemin d'exécution de la séquence d'instructions, typiquement au niveau binaire, c'est-à-dire en langage machine, et pour déterminer, pour chaque instruction logicielle, l'identifiant de chaque instruction précédente, ainsi que l'identifiant de chaque instruction suivante.

En complément, chaque premier groupe comporte en outre une quantification temporelle d'une exécution de l'instruction logicielle respective, cette quantification temporelle étant par exemple exprimée sous forme d'un nombre de cycles d'horloge pour ladite exécution, ou encore sous forme d'un intervalle de valeurs de nombres de cycles d'horloge pour ladite exécution, compris entre une valeur minimale et une valeur maximale du nombre de cycles d'horloge possibles pour exécuter l'instruction logicielle respective. Autrement dit, cette quantification temporelle d'exécution de l'instruction logicielle respective, également appelée latence d'exécution, est exprimée sous forme d'une seule valeur du nombre de cycles d'horloge, ou encore sous forme d'un intervalle de valeurs du nombre de cycles d'horloge.

En complément facultatif, chaque premier groupe comporte en outre un identifiant de l'unité d'exécution associée à l'instruction logicielle respective, tel qu'un identifiant indiquant l'unité d'exécution concernée parmi la première unité d'exécution FU1 et la deuxième unité d'exécution FU2 dans l'exemple des figures 1 et 2.

En complément facultatif encore, chaque premier groupe comporte en outre une information d'éventuelle dépendance avec d'autres instructions logicielles, telle qu'un identifiant d'un registre commun avec lesdites autres instructions logicielles et/ou un identifiant d'une zone mémoire commune avec lesdites autres instructions logicielles.

Chaque premier groupe est par exemple en forme d'un mot de données, ou message, où chacun des identifiants ou informations inclus dans le premier groupe est alors en forme d'un champ respectif de ce mot de données.

Le module de calcul 44 est configuré pour calculer la deuxième structure de modélisation du fonctionnement de la séquence d'instructions, la deuxième structure comportant une pluralité de deuxièmes groupes de données, chacun étant associé à une instruction logicielle respective.

Chaque deuxième groupe est par exemple en forme d'un mot de données, ou message, où chacun des éléments inclus dans le deuxième groupe est alors en forme d'un champ respectif de ce mot de données.

Chaque deuxième groupe de données comporte typiquement un indicateur d'appartenance éventuelle à une chaine critique d'instructions, également appelée point chaud (de l'anglais *hot point*), et en cas d'appartenance à une chaine critique respective, un identifiant d'une instruction initiale de ladite chaine critique. L'indicateur d'appartenance éventuelle à la chaine critique est par exemple repéré par l'acronyme anglais *is_local,* et l'identifiant de l'instruction initiale de la chaine critique est par exemple repéré par le nom anglais *start.*

Le module de calcul 44 est typiquement configuré pour calculer la deuxième structure de modélisation à partir de la première structure de modélisation générée par le module de génération 42, en parcourant successivement les premiers groupes de la première structure.

Chaque chaine critique respective correspond à des instructions d'une même fonction logicielle, et le module de calcul 44 est configuré pour calculer chaque chaine critique respective en résolvant un problème de sous-graphes avec contraintes sur le degré, également appelé DCSP (de l'anglais *Degree Constrained Subgraph Problem*) chaque chaine critique correspondant à un sous-graphe, les nombres d'instructions incluses dans chaque chaine critique étant inférieur à un nombre maximal prédéfini, et un paramètre d'optimisation dudit problème étant le nombre de relations entre les instructions de la chaine critique respective, ledit nombre de relations correspondant alors à un nombre d'arcs orientés dans le sous-graphe associé.

La résolution de problèmes DCSP est connue en soi, et est par exemple décrite dans l'article « Another look at the degree constrained subgraph problem » de Y.Shiloach, publié en 1981, ou encore dans l'article « On the approximability of some degree-constrained subgraph problems » de O. Amini et al., publié en 2012.

Le nombre maximal prédéfini d'instructions contenues dans chaque chaine critique est par exemple choisi en fonction d'un paramètre de l'architecture en pipeline de la plateforme informatique 34, par exemple en fonction d'un nombre d'instructions aptes à être contenues dans l'intégralité du pipeline de la plateforme informatique 34, ou encore en fonction du nombre d'instructions aptes à être contenues dans l'un des étages de ladite plateforme 34, par exemple dans le troisième étage de registre d'instructions IR ou encore dans le quatrième étage d'exécution d'instructions FU.

Dans l'exemple de la figure 2, le nombre maximal prédéfini d'instructions de la chaine critique est égal à 9, et la chaine critique $L_j$ correspond aux instructions logicielles 8 à 16, et pour cette chaine critique d'instructions, le paramètre d'optimisation est ici égal 19 correspondant à la somme de toutes les relations entre les instructions 8 à 16 de ladite chaine, également appelées relations internes, des relations entrantes vers les instructions de ladite chaine, c'est-à-dire les relations entre des instructions en amont de ladite chaine et lesdites instructions de la chaine, et des relations sortantes de ladite chaine, c'est-à-dire des relations entre une instruction de ladite chaine et une instruction logicielle en aval de ladite chaine.

Pour chaque chaine critique déterminée via la résolution du problème DCSP, le module de calcul 44 est configuré pour positionner à une valeur vraie, telle que la valeur booléenne 1 ou encore la valeur TRUE, l'indicateur d'appartenance *is_local* associé à chacune des instructions logicielles incluses dans la chaine critique déterminée, et également pour renseigner, en tant qu'identifiant d'instruction initiale *start* et pour chaque instruction logicielle incluse dans la chaine critique déterminée, l'identifiant de la première instruction logicielle de la chaine critique ainsi déterminée.

Autrement dit, après avoir déterminé une chaine critique respective, le module de calcul 44 est configuré pour renseigner l'indicateur d'appartenance *is_local* et l'identifiant d'instruction initiale *start* pour chacune des instructions logicielles formant la chaine critique déterminée, et ce de manière identique pour chacune de ces instructions, l'indicateur d'appartenance *is_local* étant positionné à la valeur vraie, et l'identifiant d'instruction initiale *start* étant renseigné avec l'identifiant de la première instruction de la chaine respective.

En complément facultatif, le module de calcul 44 est, pour chaque instruction logicielle appartenant à une chaine critique respective, configuré en outre pour calculer un champ de pré-contexte, également noté *pre_v,* et un champ de post-contexte, également noté *post_v,* le champ de pré-contexte *pre_v* incluant l'identifiant de chaque instruction précédant l'instruction associée audit deuxième groupe et n'appartenant pas à la chaine critique dont fait partie ladite instruction, et le champ de poste-contexte *post_v* incluant l'identifiant de chaque instruction succédant à l'instruction associée audit deuxième groupe et n'appartenant pas à la chaine critique dont fait partie ladite instruction.

En complément facultatif encore, le module de calcul 44 est configuré pour calculer, pour chaque instruction logicielle, au moins une quantification temporelle d'un chemin d'exécution jusqu'à ladite instruction respective, l'au moins une quantification temporelle de chemin d'exécution étant incluse dans le deuxième groupe associé à l'instruction respective.

Selon ce complément facultatif, le module de calcul 44 est typiquement configuré pour calculer chaque quantification temporelle de chemin d'exécution jusqu'à l'instruction logicielle respective à partir du champ de pré-contexte *pre_v* pour ladite instruction et des quantifications temporelles d'exécution pour les instructions identifiées dans ce champ de pré-contexte *pre_v,* et à partir de la quantification temporelle d'exécution de ladite instruction respective, c'est-à-dire de sa latence d'exécution.

Selon ce complément facultatif, le module de calcul 44 est par exemple configuré pour calculer, pour chaque instruction logicielle, une première quantification temporelle d'un plus court chemin d'exécution jusqu'à ladite instruction respective, c'est-à-dire une quantification temporelle du plus court chemin d'exécution entre une instruction initiale de la séquence et l'instruction respective, la première quantification temporelle étant également notée *sh* et incluse dans le deuxième groupe associé à ladite instruction.

Le module de calcul 44 est configuré pour calculer la première quantification temporelle sh pour l'instruction respective à partir de premières quantifications temporelles préalablement calculées pour les instructions identifiées dans le champ de pré-contexte *pre_v* de ladite instruction, c'est-à-dire pour les instructions précédant ladite instruction suivant les chemins d'exécution possibles, et à partir de la latence d'exécution de ladite instruction.

Le module de calcul 44 est par exemple configuré pour calculer la première quantification temporelle sh pour ladite instruction respective à partir du minimum parmi les premières quantifications temporelles calculées pour les instructions identifiées dans le champ de pré-contexte *pre_v* de l'instruction logicielle respective, et à partir de la latence d'exécution de ladite instruction. La première quantification temporelle sh pour ladite instruction respective est de préférence égale à la somme du minimum parmi les premières quantifications temporelles calculées pour les instructions identifiées dans le champ de pré-contexte *pre_v* de l'instruction logicielle respective et de la latence d'exécution de ladite instruction.

La première quantification temporelle sh vérifie alors par exemple l'équation suivante :

[Math 1]

$$sh(j) = min\{sh(i) \ / \ i \in pre\_v(j)\} + Inf(lat(j))$$

où *sh(j)* représente la première quantification temporelle pour l'instruction logicielle d'indice j,

min représente la fonction minimum,

*sh(i)* représente chaque première quantification temporelle pour une instruction logicielle d'indice i appartenant au champ de pré-contexte pre_v(j) de l'instruction d'indice j, chaque *sh(i)* correspondant alors à la première quantification temporelle pour une instruction respective précédant l'instruction d'indice j,

Inf représente la fonction borne inférieure, et

lat(j) représente la latence d'exécution de l'instruction d'indice j.

L'homme du métier observera que lorsque la latence d'exécution de l'instruction d'indice j est en forme d'un intervalle de valeurs de nombres de cycles d'horloge, alors la borne inférieure est égale à la valeur minimale de cet intervalle de valeurs, i.e. de cette plage de valeurs. En variante, lorsque la latence d'exécution de l'instruction d'indice j est exprimée sous forme d'un nombre donné de cycles d'horloge pour ladite exécution, alors la borne inférieure de cette latence d'exécution est égale audit nombre donné de cycles d'horloge.

Selon ce complément facultatif, le module de calcul 44 est également configuré pour calculer une deuxième quantification temporelle correspondant à la quantification temporelle d'un plus long chemin d'exécution jusqu'à ladite instruction respective, c'est-à-dire du plus long chemin d'exécution entre l'instruction initiale de la séquence et l'instruction respective, la deuxième quantification temporelle étant également notée *lo* et incluse dans le deuxième groupe associé à ladite instruction.

Le module de calcul 44 est configuré pour calculer la deuxième quantification temporelle pour l'instruction respective à partir de deuxièmes quantifications temporelles préalablement calculées pour les instructions identifiées dans le champ de pré-contexte *pre_v* de ladite instruction, et à partir de la latence d'exécution de ladite instruction.

Le module de calcul 44 est par exemple configuré pour calculer la deuxième quantification temporelle *lo* pour ladite instruction respective à partir du maximum parmi les deuxièmes quantifications temporelles calculées pour les instructions identifiées dans le champ de pré-contexte *pre_v* de l'instruction logicielle respective, et à partir de la latence d'exécution de ladite instruction. La deuxième quantification temporelle *lo* pour ladite instruction respective est de préférence égale à la somme du maximum parmi les deuxièmes quantifications temporelles calculées pour les instructions identifiées dans le champ de pré-contexte *pre_v* de l'instruction logicielle respective et de la latence d'exécution de ladite instruction.

La deuxième quantification temporelle *lo* pour l'instruction respective vérifie alors par exemple l'équation suivante :

[Math 2]

$$lo(j) = Max\{lo(i) \ / \ i \in \ pre\_v(j)\} + Sup(lat(j))$$

où *lo(j)* représente la deuxième quantification temporelle pour l'instruction logicielle d'indice j,

Max représente la fonction maximum,

*lo(i)* représente chaque deuxième quantification temporelle pour une instruction logicielle d'indice i appartenant au champ de pré-contexte pre_v(j) de l'instruction d'indice j, chaque *lo(i)* correspondant alors à la deuxième quantification temporelle pour une instruction respective précédant l'instruction d'indice j,

Sup représente la fonction borne supérieure, et

lat(j) représente la latence d'exécution de l'instruction d'indice j.

L'homme du métier observera de manière analogue que lorsque la latence d'exécution de l'instruction d'indice j est en forme d'un intervalle de valeurs de nombres de cycles d'horloge, alors la borne supérieure est égale à la valeur maximale de cet intervalle de valeurs, i.e. de cette plage de valeurs. En variante, lorsque la latence d'exécution de l'instruction d'indice j est exprimée sous forme d'un nombre donné de cycles d'horloge pour ladite exécution, alors la borne supérieure de cette latence d'exécution est égale audit nombre donné de cycles d'horloge.

En complément facultatif, le module de calcul 44 est configuré pour calculer un champ d'étendue, également référencé par le nom anglais *scope,* pour chaque chaine critique d'instructions déterminée, et pour inclure alors ledit champ d'étendue *scope* dans la deuxième structure de modélisation. Le module de calcul 44 est configuré pour calculer le champ d'étendue *scope* pour ladite chaine critique respective en fonction des accès mémoires effectués de la part de l'ensemble des instructions de ladite chaine critique, le champ d'étendue *scope* représentant une étendue, ou encore une amplitude, des accès mémoires effectués de la part de ladite chaine critique.

Selon ce complément facultatif, le champ d'étendue *scope* inclut par exemple une valeur égale au nombre d'accès mémoire effectués de la part de l'ensemble des instructions de ladite chaine critique. En complément ou en variante, le champ d'étendue *scope* est fonction de défauts de mémoire cache (de l'anglais *cache miss*) associé aux instructions de ladite chaine critique, un défaut de mémoire cache étant alors comptabilisé comme un nombre prédéfini d'accès mémoire, ce nombre prédéfini d'accès mémoire étant typiquement de valeur strictement supérieure à 1, afin de tenir compte davantage dans ledit champ d'étendue *scope* de défaut(s) de mémoire cache que de simple accès mémoire. Un défaut de mémoire cache est par exemple comptabilisé comme étant égal à 10 cycles d'accès mémoires.

Le champ d'étendue *scope* permet alors d'effectuer une priorisation entre plusieurs chaines critiques calculées, notamment lorsque plusieurs chaines critiques sont associées à une même fonction logicielle respective. La chaine critique sélectionnée est alors celle pour laquelle la valeur incluse dans le champ d'étendue *scope,* représentative de l'étendue des accès mémoires effectués par la chaine critique respective, est la plus élevée.

En complément facultatif encore, le module de calcul 44 est configuré pour calculer un champ de variabilité *var* pour chaque chaine critique d'instructions respective, et pour inclure alors ledit champ de variabilité *var* dans la deuxième structure de modélisation. Le champ de variabilité *var* comporte une variable de pré-contexte égale à l'identifiant le plus fréquent parmi les identifiants d'instructions contenus dans les champs de pré-contexte *pre_v* pour ladite chaine critique ; et une variable de post-contexte égale à l'identifiant le plus fréquent parmi les identifiants d'instructions contenus dans les champs de post-contexte *post_v* pour ladite chaine critique respective.

Le champ de variabilité *var* permet alors d'identifier un point d'entrée critique de la chaîne critique via le champ de pré-contexte *pre_v* pour ladite chaine critique ; et/ou d'identifier un point de sortie critique de ladite chaîne critique via le champ de post-contexte *post_v.* Par exemple, le champ de pré-contexte *pre_v* permet d'établir des valeurs d'entrée qui sont utiles pour explorer complètement de la chaîne critique, en utilisant la procédure susmentionnée, et le champ de post-contexte *post_v* permet d'avoir les valeurs de sortie observées de l'exploration complète de la chaîne critique. Ainsi, le champ de variabilité *var* permet de capturer des relations temporelles entrée-sortie au niveau de la chaîne critique.

En complément, le champ de variabilité *var* est pris en compte lors de la propagation des données de quantification temporelle d'une chaine à la suivante. Selon ce complément, le champ de post-contexte *post_v* de la chaîne critique $L_j$ est propagé à la chaîne critique suivante $L_{j+1}$, ce champ de post-contexte *post_v* de la chaîne critique $L_j$ étant par exemple pris en compte pour la détermination du champ de pré-contexte *pre_v* de la chaîne critique suivante $L_{j+1}$.

Le module de recherche 46 est configuré pour rechercher une ou plusieurs anomalies temporelles à partir de chaine(s) critique(s) d'instructions déterminée(s) via la deuxième structure de modélisation. Une anomalie temporelle est détectée en cas d'incohérence entre les quantifications temporelles associées à une chaine critique courante et les quantifications temporelles associées à une chaine critique suivante. Le module de recherche 46 est alors typiquement configuré pour rechercher des incohérences entre les quantifications temporelles *sh, lo* de deux chaines critiques successives. Une incohérence entre les quantifications temporelles associées à deux chaines critiques successives correspond par exemple au cas où le plus long chemin d'exécution correspondant à une deuxième quantification temporelle associée à une chaine critique respective ne comporte pas les instructions logicielles de la chaine critique précédente, c'est-à-dire ne passe pas par la chaine critique précédente.

Une anomalie temporelle lors de l'exécution de la séquence d'instructions logicielles est un comportement temporel contre-intuitif lors de l'exécution de cette séquence, correspondant typiquement à une rupture dans la monotonie de l'évolution temporelle de l'exécution de la séquence, ceci étant alors dû à une exécution rapide locale ralentissant une exécution globale.

Une rupture de la monotonie de l'évolution temporelle de l'exécution de la séquence d'instructions logicielles est typiquement due à la présence d'un ou plusieurs défauts de mémoire cache (de l'anglais *cache misses)* associés à une ou plusieurs des instructions logicielles. Autrement dit, la présence de tels défauts de mémoire cache est susceptible d'entraîner l'apparition d'une anomalie temporelle.

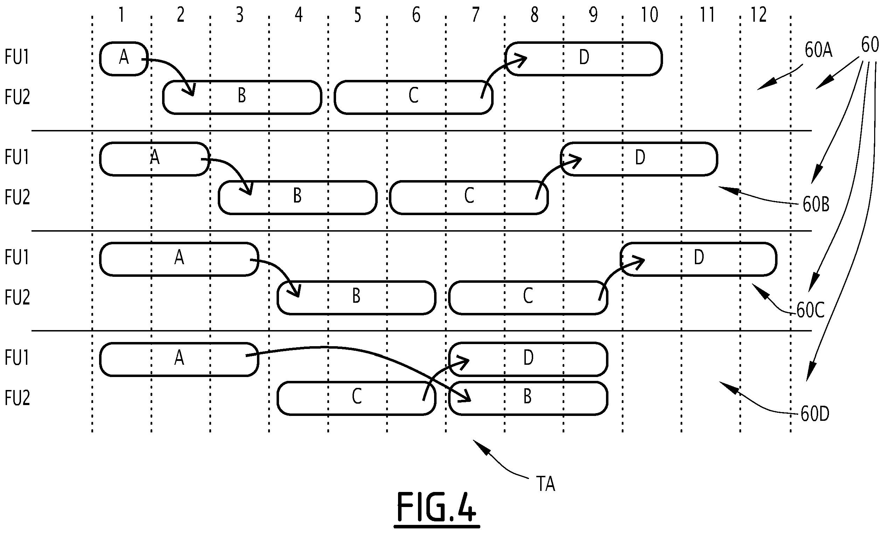

Une rupture de monotonie de l'évolution temporelle est illustrée à titre d'exemple sur la figure 4. Dans l'exemple de la figure 4, quatre chemins d'exécution 60, à savoir un premier 60A, un deuxième 60B, un troisième 60C et un quatrième 60D chemins d'exécution, sont représentés en parallèle dans le cadre de l'exécution d'une séquence formée de quatre instructions logicielles A, B, C et D, où les instructions A et D sont destinées à être exécutées par la première unité d'exécution FU1, et les instructions logicielles B et C sont destinées à être exécutées par la deuxième unité d'exécution FU2.

Dans cet exemple de la figure 4, la durée d'exécution de la séquence augmente progressivement depuis le premier chemin d'exécution 60A représenté en haut de la figure 4, et pour lequel l'exécution de la séquence est effectuée en dix cycles d'horloge numérotés 1 à 10, jusqu'au troisième chemin d'exécution 60C, ce troisième chemin d'exécution 60C correspondant à une exécution de la séquence en douze cycles d'horloge numérotés 1 à 12. L'homme du métier observera alors que l'augmentation de la durée d'exécution entre les premier 60A et troisième 60C chemins est due à une augmentation progressive de la durée d'exécution de l'instruction logicielle A par la première unité d'exécution FU1, celle-ci étant égale à un cycle d'horloge pour le premier chemin d'exécution 60A, puis à deux cycles d'horloge numérotés 1 et 2 pour le deuxième chemin d'exécution 60B, et enfin à trois cycles d'horloge pour le troisième chemin d'exécution 60C. Le quatrième chemin d'exécution 60D, représenté en bas de la figure 4, présente alors une anomalie temporelle TA (de l'anglais *Timing Anomaly*), puisque la durée d'exécution globale de la séquence correspond alors à neuf cycles d'horloge, numérotés 1 à 9, c'est-à-dire la durée d'exécution de la séquence la plus courte parmi les quatre chemins d'exécution 60 représentés à la figure 4, alors que la durée d'exécution de l'instruction logicielle A pour ce quatrième chemin d'exécution 60D est égale à la durée d'exécution de l'instruction logicielle A pour le troisième chemin d'exécution 60C, et est strictement supérieure à la durée d'exécution de l'instruction logicielle A pour chacun des premier 60A et deuxième 60B chemins d'exécution.

On observe alors que dans cet exemple de la figure 4, l'anomalie temporelle TA est due au fait que, pour ce quatrième chemin d'exécution 60D, l'instruction logicielle C est exécutée avant l'instruction logicielle D par la deuxième unité d'exécution FU2, et que la dernière instruction logicielle D de la séquence est alors exécutée par la première unité d'exécution FU1 en parallèle de l'exécution de l'instruction logicielle B par la deuxième unité d'exécution FU2. L'exécution de la dernière instruction logicielle D s'achève alors à la fin du cycle 9, en même temps que celle de l'instruction logicielle B, et ce raccourcissement de la durée d'exécution globale de la séquence engendre alors une rupture de la monotonie de l'évolution de la durée de l'exécution de ladite séquence, caractéristique de l'anomalie temporelle TA à détecter.

En complément facultatif, le module de propagation 48 est configuré pour propager des données de quantifications temporelles d'une chaine critique courante d'instructions à une chaine critique suivante d'instructions, les quantifications temporelles associées à la chaine critique suivante étant alors déterminées à partir de celles associées à la chaine critique courante.

Pour la propagation des données de quantification temporelle d'une chaine à la suivante, le module de propagation 48 est par exemple configuré pour calculer au moins une valeur limite 70, 80 représentative d'une quantification temporelle d'exécution globale de la chaine critique courante, telle que la chaine critique $L_j$, afin de la propager ensuite à la chaine critique suivante, telle que la chaine critique $L_{j+1}$.

Le module de propagation 48 est par exemple configuré pour calculer une première valeur limite 70 correspondant à un plus court chemin d'exécution globale de la chaine critique, cette première valeur limite 70 étant par exemple notée Lj.sh pour la chaine critique $L_j$ ; et une deuxième valeur limite 80 correspondant à un plus long chemin d'exécution globale pour la chaine critique, cette deuxième valeur limite 80 étant par exemple notée Lj.lo pour la chaine critique $L_j$.

Selon ce complément facultatif, le module de propagation 48 est par exemple configuré pour calculer l'au moins une valeur limite 70, 80 en appliquant un algorithme de vérification de modèle (de l'anglais *model checking*) à la chaine critique courante, telle que la chaine critique $L_j$, c'est-à-dire en mettant en œuvre ledit algorithme de vérification de modèle pour ladite chaine critique courante.

L'algorithme de vérification de modèle est connu en soi, et est par exemple décrit dans le document intitulé « Model checking (second edition) » de E. Clarke et al., MIT Press, 2018, et est basé sur une structure de Kripke permettent de modéliser un système de transition, tel que la chaine critique respective. La structure de Kripke est typiquement en forme d'un 4-uplet (S, S0, R, L), où S est un ensemble d'un nombre fini d'états ; S0 est l'ensemble des valeurs initiales des états de l'ensemble S ; R est une relation de transition sur les états de l'ensemble S ; et L est une fonction d'étiquetage (de l'anglais *labelling function*) des états de l'ensemble S en formules logiques, c'est-à-dire une fonction d'interprétation desdits états de l'ensemble S en formules logiques.

Pour l'application de l'algorithme de vérification de modèle à la chaine critique respective, et en particulier pour la mise en œuvre de la structure de Kripke pour ladite chaine critique, le module de propagation 48 est alors configuré pour renseigner le uplet S0 correspondant à l'ensemble des valeurs initiales des états avec le champ de pré-contexte *pre_v,* et l'algorithme de vérification de modèle permet alors d'explorer l'ensemble des chemins d'exécution pour ladite chaine critique, cet ensemble des chemins d'exécution correspondant au uplet S, ou autrement dit chaque état de l'ensemble S correspondant à une exécution possible des instructions logicielles de la chaine critique, tel que décrit par exemple dans l'article « Formal executable models for automatic detection of timing anomalies » de M. Asavoae et al., WCET 2018.

Le module de propagation 48 est alors configuré pour calculer les première et deuxième valeurs limites 70, 80 pour la chaine critique courante, telles que les valeurs Lj.sh et Lj.lo pour la chaine critique $L_j$, via la mise en œuvre de l'algorithme de vérification de modèle pour ladite chaine critique courante, telle que la chaine critique $L_j$ ; puis pour propager la ou les valeurs limites 70, 80 ainsi calculées jusqu'à la chaine critique suivante, telle que la chaine critique $L_{j+1}$.

Le module de propagation 48 est configuré pour effectuer ladite propagation de données de quantification temporelle en déterminant un chemin d'exécution reliant la fin de la chaine critique courante, telle que la chaine critique $L_j$, au début de la chaine critique suivante, telle que la chaine critique $L_{j+1}$, ce chemin d'exécution étant de préférence unique. Le module de propagation 48 est alors par exemple configuré pour additionner, à la ou aux valeurs limites 70, 80, la latence d'exécution de chacune des instructions logicielles formant ledit chemin entre la fin de la chaine critique courante et le début de la chaine critique suivante.

Le module de propagation 48 est alors configuré pour mettre à jour le champ de pré-contexte *pre_v* pour la chaine critique suivante, telle que la chaine critique $L_{j+1}$, avec le résultat de cette propagation, c'est-à-dire avec la somme de la ou des valeurs limites 70, 80 de la chaine critique qui la précède, c'est-à-dire de la chaine critique courante, telle que la chaine critique $L_j$, et des latences d'exécution pour les instructions logicielles entre ladite chaine critique courante et la chaine critique suivante, lesdites instructions entre deux chaines critiques successives étant également appelées instructions intermédiaires.

En complément encore, le module de propagation 48 est alors configuré pour appliquer l'algorithme de vérification de modèle à la chaine critique suivante, telle que la chaine critique $L_{j+1}$, en utilisant le résultat de cette propagation contenue dans le champ de pré-contexte *pre_v* mis à jour, afin de calculer l'au moins une valeur limite 70, 80 pour la chaine critique suivante, et par exemple la première valeur limite 70 pour ladite chaine critique suivante, telle que la valeur Lj+1.sh, et la deuxième valeur limite 80 pour ladite chaine critique suivante, telle que la valeur Lj+1.lo.

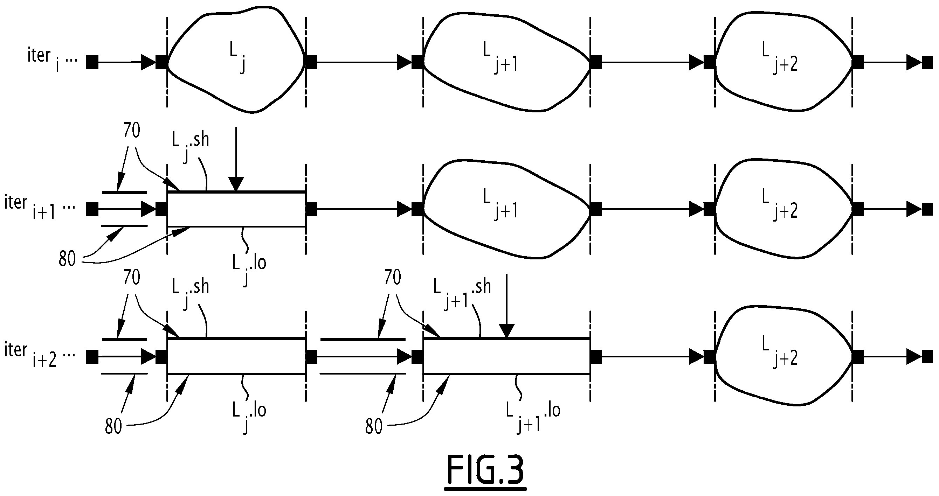

Cette propagation de données de quantification temporelle est illustrée sur la figure 3 où lors d'une première itération, notée $iter_i$, le module de calcul 44 est configuré pour calculer des chaines critiques successives notées $L_j$, $L_{j+1}$, $L_{j+2}$ via la résolution de problèmes DCSP. Puis, lors d'une itération suivante notée $iter_{i+1}$, le module de propagation 48 est configuré pour calculer les valeurs limites 70, 80 associées à la chaine critique courante, telles que les valeurs limites Lj.sh, Lj.lo pour la chaine critique $L_j$, via la mise en œuvre de l'algorithme de vérification de modèle pour ladite chaine critique courante, telle que la chaine critique $L_j$. Ensuite, lors d'une itération subséquente, notée $iter_{i+2}$, le module de propagation 48 est configuré - d'une part - pour effectuer la somme des latences d'exécution pour les instructions logicielles se trouvant entre la fin de la chaine critique courante, telle que la chaine critique $L_j$, et le début de la chaine critique suivante, , telle que la chaine critique $L_{j+1}$, et additionner cette somme aux valeurs limites 70, 80 afin de propager ces valeurs 70, 80 de la chaine critique courante jusqu'à la chaine critique suivante, puis d'autre part - pour mettre en œuvre l'algorithme de vérification de modèle pour la chaine critique suivante, telle que la chaine critique $L_{j+1}$, afin de calculer la ou les valeurs limites 70, 80, telles que les valeurs limites Lj+1.sh, Lj+1.lo, et en prenant alors en compte le résultat de la propagation temporelle préalablement effectuée et contenue dans le champ de pré-contexte *pre_v* mis à jour pour la chaine critique suivante, telle que la chaine critique $L_{j+1}$.

Selon ce complément facultatif, le module de recherche 46 est alors configuré en outre pour rechercher une éventuelle anomalie temporelle entre la chaine critique courante et la chaine critique suivante, en vérifiant si la ou les valeurs limites 70, 80 calculées pour la chaine critique suivante sont cohérentes avec la chaine critique qui la précède, c'est-à-dire avec la chaine critique courante, et typiquement pour vérifier si le plus long chemin d'exécution globale jusqu'à la chaine critique suivante correspondant à la deuxième valeur limite 80 calculée pour la chaine critique suivante, telle que la valeur Lj+1.lo pour la chaine critique $L_{j+1}$, inclut les instructions logicielles de la chaine critique qui la précède, c'est-à-dire de la chaine critique courante, telle que la chaine critique $L_j$.

Si le plus long chemin d'exécution globale jusqu'à la chaine critique suivante contient les instructions logicielles de la chaine critique qui la précède, c'est-à-dire de la chaine critique courante, ou autrement dit si le plus long chemin d'exécution globale jusqu'à la chaine critique suivante passe par la chaine critique courante, alors le module de recherche 46 est configuré pour déterminer une absence d'anomalie temporelle entre la chaine critique courante et la chaine critique suivante. Sinon, si le plus long chemin d'exécution globale jusqu'à la chaine critique suivante ne contient pas les instructions logicielles de la chaine critique qui la précède, c'est-à-dire de la chaine critique courante, alors le module de recherche 46 est configuré pour détecter la présence d'une anomalie temporelle entre la chaine critique courante et la chaine critique suivante.

En complément encore, en cas de détermination d'une absence d'anomalie temporelle entre la chaine critique courante et la chaine critique suivante par le module de recherche 46, le module de propagation 48 est configuré en outre pour poursuivre la propagation des données de quantification temporelle d'une chaine critique à la suivante, et alors pour effectuer une opération de propagation en propageant les données de quantification temporelle de la chaine critique $L_{j+1}$ jusqu'à la chaine critique $L_{j+2}$, et ainsi de suite.

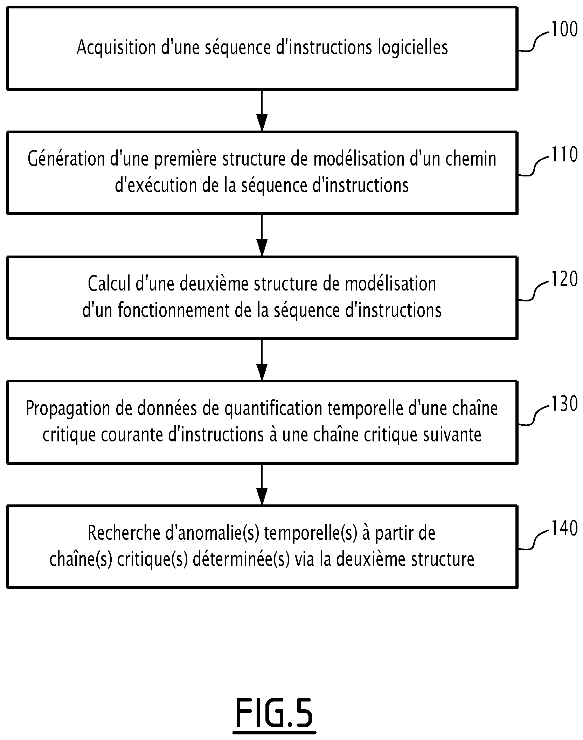

Le fonctionnement du dispositif électronique de surveillance 30 selon l'invention va être à présent décrit en regard de la figure 5 représentant un organigramme du procédé, selon l'invention, de surveillance du code exécutable 32 apte à être exécuté sur la plateforme informatique 34.

Lors d'une étape initiale 100, le dispositif électronique de surveillance 30 acquiert, via son module d'acquisition 40, la séquence d'instructions logicielles formant le code exécutable 32 destiné à être surveillé. La séquence d'instructions logicielles acquise lors de cette étape initiale 100 est typiquement une séquence d'instructions exprimées en langage machine et qui sont alors directement interprétables par la plateforme informatique 34. Ces instructions logicielles sont par exemple des instructions de type RISC, comme dans l'exemple décrit précédemment.

Le dispositif de surveillance 30 passe ensuite à l'étape suivante 110 lors de laquelle le module de génération 42 génère la première structure de modélisation modélisant le ou les chemins d'exécution de la séquence d'instructions, la première structure de modélisation étant générée à partir de la séquence d'instructions et comportant un premier groupe de données respectif pour chacune des instructions logicielles de ladite séquence. Chaque premier groupe respectif comporte l'identifiant de l'instruction précédente et l'identifiant de l'instruction suivante pour l'instruction logicielle respective associée audit premier groupe.

Lors de cette étape de génération 110, chaque premier groupe généré comporte en outre la latence d'exécution de l'instruction logicielle respective, cette latence d'exécution étant typiquement exprimée sous forme d'un intervalle de valeurs de nombres de cycles d'horloges nécessaires pour l'exécution de ladite instruction, ou encore sous forme d'un nombre donné de cycles d'horloges nécessaires pour ladite exécution.

En complément facultatif, chaque premier groupe respectif comporte en outre l'identifiant de l'unité d'exécution associé à l'instruction logicielle respective, tel que l'identifiant de l'unité d'exécution mise en œuvre parmi la première unité fonctionnelle FU1 et la deuxième unité fonctionnelle FU2 pour la plateforme informatique 34 de l'exemple de la figure 1.

Selon ce complément, l'identifiant de l'unité d'exécution est utilisé pour modéliser l'exécution d'instructions logicielles sur une unité d'exécution donnée, la vitesse d'exécution des instructions par une unité d'exécution respective, ou corollairement le temps d'exécution, ou encore la latence d'exécution, dépendant de l'unité d'exécution considérée. Selon ce complément, l'identifiant de l'unité d'exécution est alors pris en compte en outre lors de la résolution du problème de sous-graphes avec contraintes sur le degré ou DCSP, pour le calcul de la chaîne critique respective.

En complément encore, chaque premier groupe respectif comporte en outre l'information d'éventuelle dépendance avec d'autres instructions, telle que l'identifiant de chaque registre en commun entre l'instruction logicielle respective et lesdites autres instructions et/ou l'identifiant de chaque zone mémoire commune avec lesdites autres instructions, c'est-à-dire de chaque zone mémoire utilisée en commun par l'instruction logicielle respective et lesdites autres instructions.

Selon ce complément, l'information d'éventuelle dépendance est utilisée pour améliorer encore la modélisation du chemin d'exécution, en particulier en permettant d'indiquer quand les instructions logicielles sont exécutées au sein de la séquence d'instructions.

L'homme du métier observera en outre que lors de l'exploration complète d'une chaîne critique, la séquence d'instructions considérées est exécutée suivant le mode d'exécution de la plate-forme informatique, par exemple suivant un mode hors-ordre (de l'anglais *out of order*), l'ordre d'exécution de la séquence d'instructions de la chaîne critique n'étant, autrement dit, pas nécessairement un ordre séquentiel.

Aussi, lorsque le mode d'exécution de la plate-forme informatique n'est pas un mode d'exécution séquentielle, et que les instructions logicielles ne sont alors pas exécutées selon un ordre séquentiel, l'information d'éventuelle dépendance est prise en compte en outre lors de la résolution du problème de sous-graphes avec contraintes sur le degré ou DCSP, pour le calcul de la chaîne critique respective, afin de permettre l'exploration des différents chemins d'exécution possibles.

Lors de l'étape suivante 120, le dispositif de surveillance 30 calcule, via son module de calcul 44, la deuxième structure de modélisation modélisant le fonctionnement de la séquence d'instructions, la deuxième structure étant calculée à partir de la première structure de modélisation et comportant un deuxième groupe de données respectif pour chacune des instructions logicielles de la séquence.

Chaque deuxième groupe comporte notamment l'indicateur d'appartenance *is_local* indiquant une appartenance éventuelle de l'instruction respective à une chaine critique correspondante de la séquence, c'est-à-dire indiquant l'appartenance ou non de ladite instruction logicielle à un point chaud respectif, cet indicateur étant typiquement positionné la valeur vraie si l'instruction logicielle respective appartient à une chaine critique, et à la valeur faux, telle que la valeur booléenne 0 ou encore la valeur FALSE, si ladite instruction logicielle respective n'appartient à aucune chaine critique. Chaque deuxième groupe comporte en outre, en cas d'appartenance à une chaine critique respective, l'identifiant d'instruction initiale *start,* c'est-à-dire l'identifiant de la première instruction logicielle de la chaine critique respective.

Lors de cette étape de calcul 120, la deuxième structure de modélisation est obtenue à partir de la première structure, en parcourant successivement les premiers groupes de la première structure. Chaque chaine critique respective correspond à des instructions d'une même fonction logicielle, et est typiquement calculée en résolvant un problème DCSP, c'est-à-dire un problème de sous-graphes avec contraintes sur le degré, comme décrit précédemment.

En complément, pour chaque instruction logicielle appartenant à une chaine critique respective, le module de calcul 44 calcule en outre le champ de pré-contexte *pre_v* et le champ de post-contexte *post_v,* le champ de pré-contexte *pre_v* incluant l'identifiant de chaque instruction précédant l'instruction logicielle respective et n'appartenant pas à la chaine critique dont fait partie ladite instruction, et le champ de post-contexte *post_v* incluant l'identifiant de chaque instruction succédant à l'instruction logicielle respective et n'appartenant pas à la chaine critique dont fait partie ladite instruction.

En complément encore, le module de calcul 44 calcule, lors de cette étape 120, l'au moins une quantification temporelle *sh, lo* du chemin d'exécution jusqu'à l'instruction logicielle respective, et de préférence à la fois la première quantification temporelle sh égale à la quantification temporelle du plus court chemin d'exécution jusqu'à l'instruction logicielle respective, et la deuxième quantification temporelle *lo* égale à la quantification temporelle du plus long chemin d'exécution jusqu'à ladite instruction respective.

Selon ce complément, chaque quantification temporelle de chemin d'exécution *lo, sh* est typiquement calculée à partir du champ de pré-contexte *pre_v* et des quantifications temporelles d'exécution des instructions identifiées dans ledit champ de pré-contexte, et également à partir de la latence d'exécution de ladite instruction respective.

En complément facultatif encore, lors de l'étape 120, le module de calcul 44 calcule en outre le champ d'étendue *scope* pour chaque chaine critique d'instructions respective, ce champ d'étendue *scope* permettant notamment d'effectuer une priorisation entre plusieurs chaines critiques éventuelles associées à la même fonction logicielle, afin de sélectionner alors la chaine critique la plus prioritaire pour cette fonction logicielle, typiquement la chaine critique pour laquelle le champ d'étendue *scope* présente la valeur la plus élevée, caractéristique d'une plus grande utilisation des ressources mémoires de la plateforme informatique 34.

En complément facultatif encore, le module de calcul 44 calcule en outre lors de cette étape 120, le champ de variabilité *var* pour chaque chaine critique respective. Ce champ de variabilité *var* incluant par exemple la variable de pré-contexte égale à l'identifant le plus fréquent parmi les identifants d'instructions contenus dans les champs de pré-contexte *pre_v* pour ladite chaine critique et permettant alors d'identifier l'instruction logicielle la plus susceptible d'être exécutée préalablement à ladite chaine critique, et/ou la variable de post-contexte égale à l'identifant le plus fréquent parmi les identifants d'instructions contenus dans les champs de post-contexte *post_v* pour la dite chaine critique, permettant de manière analogue d'identifier l'instruction logicielle la plus susceptible d'être exécutée postérieurement à ladite chaine critique.

Lors d'une étape optionnelle 130 suivante, le module de propagation 48 propage les données de quantification temporelle d'une chaine critique courante d'instructions à la chaine critique suivante, et par exemple de la chaine critique $L_j$ à la chaine critique $L_{j+1}$. Cette propagation de données de quantification temporelle est par exemple effectuée en mettant tout d'abord en œuvre l'algorithme de vérification de modèle pour la chaine critique courante, telle que la chaine critique $L_j$, afin de calculer la ou les valeurs limites 70, 80, telles que la première valeur limite 70, également notée Lj.sh et correspondant au plus court chemin d'exécution globale jusqu'à la chaine critique $L_j$, et la deuxième valeur limite 80, également notée Lj.lo et correspondant au plus long chemin d'exécution jusqu'à la chaine critique $L_j$ Le module de propagation 48 propage ensuite la ou les valeurs limites 70, 80 ainsi calculées jusqu'à la chaine critique suivante, telle que la chaine critique $L_{j+1}$, en leur additionnant les latences d'exécution des instructions logicielles intermédiaires comprises entre la fin de la chaine critique courante, telle que la chaine critique $L_j$, et le début de la chaine critique suivante, telle que la chaine critique $L_{j+1}$.

Le dispositif de surveillance 30 recherche enfin, lors de l'étape 140 et via son module de recherche 46, une ou plusieurs anomalies temporelles à partir des chaines critiques d'instructions déterminées via la deuxième structure de la modélisation lors de l'étape de calcul 120. Cette recherche d'anomalie(s) temporelle(s) est typiquement effectuée en recherchant des incohérences éventuelles entre les quantifications temporelles associées à la chaine critique courante et celles associées à la chaine critique suivante, par exemple en recherchant les éventuelles incohérences entre les quantifications temporelles des chaines critiques $L_j$ et $L_{j+1}$, puis lors d'une itération suivante entre celles des chaines critiques $L_{j+1}$ et $L_{j+2}$.

En complément, lorsque les données de quantification temporelle ont été propagées d'une chaine critique courante à la suivante lors de l'étape optionnelle 130, par exemple de la chaine critique $L_j$ à la chaine critique $L_{j+1}$ comme représenté sur la figure 3, le module de recherche 46 va de préférence rechercher la présence d'anomalie(s) temporelle(s) éventuelle(s) en vérifiant si le plus long chemin d'exécution globale jusqu'à une chaine critique respective, telle que la chaine $L_{j+1}$, contient les instructions logicielles de la chaine critique précédente, telle que la chaine critique $L_j$, et détermine alors le cas échéant une absence d'anomalie temporelle. Cette vérification est typiquement effectuée via une comparaison d'une liste triée des identifiants des instructions logicielles formant le plus long chemin global d'exécution jusqu'à la chaine critique $L_{j+1}$ avec la liste des instructions logicielles formant la chaine critique $L_j$ qui la précède.

Selon ce complément, si le module de recherche 46 conclut au contraire, suite à cette vérification, que le plus long chemin d'exécution globale jusqu'à la chaine critique $L_{j+1}$ ne passe pas par la chaine critique $L_j$ qui la précède, c'est-à-dire ne contient pas toutes les instructions logicielles de ladite chaine critique $L_j$, alors le module de recherche 46 détermine la présence d'une anomalie temporelle entre les chaines critiques $L_j$ et $L_{j+1}$. Le cas échéant, le module de recherche 46 génère de préférence une alerte, afin de signaler ladite anomalie temporelle.

Si aucune anomalie temporelle n'a été trouvée lors de l'étape de recherche 140 entre les chaines critiques $L_j$ et $L_{j+1}$, alors le dispositif de surveillance 30 retourne par exemple à l'étape optionnelle 130 afin d'effectuer une nouvelle propagation de données de quantification temporelle d'une chaine critique à la suivante, en l'occurrence de la chaine critique $L_{j+1}$ à la chaine critique $L_{j+2}$, puis passe ensuite à nouveau à l'étape de recherche 140 afin de rechercher la présence d'anomalie(s) temporelle(s) éventuelle(s) entre les chaines critiques $L_{j+1}$ et $L_{j+2}$, et ainsi de suite.

Ainsi, le dispositif de surveillance 30 et le procédé de surveillance selon l'invention permettent de déterminer automatiquement la ou les chaines critiques d'instructions, également appelées points chauds, pour la séquence d'instructions logicielles formant le code exécutable 32 surveillé, ceci à partir de la deuxième structure de modélisation calculée par le module de calcul 44, cette deuxième structure étant elle-même obtenue à partir de la première structure de modélisation générée par le module de génération 42.

Le dispositif de surveillance 30 et le procédé de surveillance selon l'invention permettent ensuite de rechercher en outre la présence d'une ou plusieurs anomalies temporelles éventuelles associées à l'exécution de la séquence d'instructions formant ledit code exécutable 32, ceci à partir des chaines critiques d'instructions déterminées via la deuxième structure de modélisation, et typiquement à partir des quantifications temporelles des chemins d'exécution associés à chacune de ces chaines critiques d'instructions.

On conçoit ainsi que le dispositif de surveillance 30 et le procédé de surveillance selon l'invention permettent de détecter automatiquement et facilement d'éventuelles anomalies temporelles.

**EP 4 064 087 B1**

**Revendications**

1.  Procédé de surveillance d'un code exécutable apte à être exécuté sur une plateforme informatique, le code exécutable comportant une séquence d'instructions logicielles,

    le procédé étant mis en œuvre par un dispositif électronique de surveillance et comprenant les étapes suivantes :

    - acquisition (100) de la séquence d'instructions logicielles ;
    - génération (110) d'une première structure de modélisation d'un chemin d'exécution de la séquence d'instructions, la première structure étant générée à partir de la séquence d'instructions et comportant une pluralité de premiers groupes de données, chacun associé à une instruction logicielle respective ; chaque premier groupe comportant un identifiant d'une instruction précédente et un identifiant d'une instruction suivante ;
    - calcul (120) d'une deuxième structure de modélisation d'un fonctionnement de la séquence d'instructions, la deuxième structure comportant une pluralité de deuxièmes groupes de données, chacun associé à une instruction logicielle respective ; chaque deuxième groupe comportant un indicateur d'appartenance éventuelle à une chaîne critique d'instructions, et en cas d'appartenance à une chaîne critique respective, un identifiant d'une instruction initiale de ladite chaine critique ; la deuxième structure étant créée à partir de la première structure, en parcourant successivement les premiers groupes de la première structure ; une chaîne critique respective correspondant à des instructions d'une même fonction logicielle et étant calculée en résolvant un problème de sous-graphes avec contraintes sur le degré, chaque chaîne critique correspondant à un sous-graphe, le nombre d'instructions incluses dans chaque chaîne critique étant inférieur ou égal à un nombre maximal prédéfini, et un paramètre d'optimisation étant le nombre de relations entre les instructions de la chaîne critique respective, ledit nombre de relations correspondant à un nombre d'arcs dans le sous-graphe associé ; et
    - recherche d'anomalie(s) temporelle(s) à partir de chaîne(s) critique(s) d'instructions déterminée(s) via la deuxième structure de modélisation.

2.  Procédé selon la revendication 1, dans lequel lors de l'étape de calcul, pour chaque instruction logicielle appartenant à une chaîne critique respective, chaque deuxième groupe comporte en outre un champ de pré-contexte et un champ de post-contexte ; le champ de pré-contexte incluant l'identifiant de chaque instruction précédant l'instruction associée audit deuxième groupe et n'appartenant pas à la chaine critique dont fait partie ladite instruction, et le champ de post-contexte incluant l'identifiant de chaque instruction succédant à l'instruction associée audit deuxième groupe et n'appartenant pas à la chaine critique dont fait partie ladite instruction.

3.  Procédé selon la revendication 2, dans lequel lors de l'étape de calcul, un champ d'étendue est ajouté pour chaque chaîne critique d'instructions respective dans la deuxième structure de modélisation, le champ d'étendue incluant un nombre d'accès mémoire de la part de l'ensemble des instructions de ladite chaîne critique.

4.  Procédé selon la revendication 2 ou 3, dans lequel lors de l'étape de calcul, une variable de pré-contexte et une variable de post-contexte sont ajoutées pour chaque chaîne critique d'instructions respective dans la deuxième structure de modélisation, la variable de pré-contexte étant égale à l'identifiant le plus fréquent parmi les identifiants d'instruction contenus dans les champs de pré-contexte pour ladite chaîne critique, et la variable de post-contexte étant égale à l'identifiant le plus fréquent parmi les identifiants d'instruction contenus dans les champs de post-contexte pour ladite chaîne critique.

5.  Procédé selon l'une quelconque des revendications précédentes, dans lequel chaque premier groupe comporte en outre une quantification temporelle d'une exécution de l'instruction logicielle respective, et chaque deuxième groupe comporte en outre au moins une quantification temporelle d'un chemin d'exécution de la séquence jusqu'à ladite instruction respective ;

    la quantification temporelle de l'exécution de l'instruction logicielle respective étant de préférence un nombre de cycles d'horloge pour ladite exécution.

6.  Procédé selon les revendications 2 et 5, dans lequel chaque quantification temporelle d'un chemin d'exécution jusqu'à l'instruction logicielle respective est calculée à partir du champ de pré-contexte pour ladite instruction et des quantifications temporelles d'exécution pour ladite instruction respective et pour les instructions identifiées dans le champ de pré-contexte.

7.  Procédé selon la revendication 5 ou 6, dans lequel le procédé comprend en outre une étape de propagation de données de quantification temporelle d'une chaine critique précédente d'instructions à une chaine critique courante d'instructions, les quantifications temporelles associées à la chaine critique courante étant déterminées à partir de celles associées à la chaine critique précédente.

8. Procédé selon la revendication 7, dans lequel lors de l'étape de recherche, une anomalie temporelle est détectée en cas d'incohérence entre les quantifications temporelles associées à la chaine critique courante et celles associées à la chaine critique précédente.

9. Procédé selon l'une quelconque des revendications 5 à 8, dans lequel une première quantification temporelle incluse dans le deuxième groupe est une quantification temporelle d'un plus court chemin d'exécution entre une instruction initiale de la séquence et l'instruction respective ; et une deuxième quantification temporelle incluse dans le deuxième groupe est une quantification temporelle d'un plus long chemin d'exécution entre ladite instruction initiale et l'instruction respective.

10. Procédé selon l'une quelconque des revendications précédentes, dans lequel la plateforme informatique comporte plusieurs unités d'exécution d'instruction(s) (FU1, FU2), et chaque premier groupe comporte en outre un identifiant de l'unité d'exécution (FU1, FU2) associée à l'instruction logicielle respective.

11. Procédé selon l'une quelconque des revendications précédentes, dans lequel chaque premier groupe comporte en outre une information d'éventuelle dépendance avec d'autres instructions, telle qu'un identifiant de registre commun avec lesdites autres instructions et/ou un identifiant de zone mémoire commune avec lesdites autres instructions.

12. Procédé selon l'une quelconque des revendications précédentes, dans lequel la séquence d'instructions logicielles est une séquence d'instructions exprimées en langage machine, directement interprétables par la plateforme informatique.

13. Programme d'ordinateur comportant des instructions logicielles qui, lorsqu'elles sont exécutées par un ordinateur, mettent en oeuvre un procédé selon l'une quelconque des revendications précédentes.

14. Dispositif électronique (30) de surveillance d'un code exécutable (32) apte à être exécuté sur une plateforme informatique (34), le code exécutable (32) comportant une séquence d'instructions logicielles, le dispositif comprenant :

- un module d'acquisition (40) configuré pour acquérir la séquence d'instructions logicielles ;
- un module de génération (42) configuré pour générer une première structure de modélisation d'un chemin d'exécution de la séquence d'instructions, la première structure étant générée à partir de la séquence d'instructions et comportant une pluralité de premiers groupes de données, chacun associé à une instruction logicielle respective ; chaque premier groupe comportant un identifiant d'une instruction précédente et un identifiant d'une instruction suivante ;
- un module de calcul (44) configuré pour calculer une deuxième structure de modélisation d'un fonctionnement de la séquence d'instructions, la deuxième structure comportant une pluralité de deuxièmes groupes de données, chacun associé à une instruction logicielle respective ; chaque deuxième groupe comportant un indicateur d'appartenance éventuelle à une chaîne critique d'instructions, et en cas d'appartenance à une chaîne critique respective, un identifiant d'une instruction initiale de ladite chaine critique ; la deuxième structure étant créée à partir de la première structure, en parcourant successivement les premiers groupes de la première structure ; une chaîne critique respective correspondant à des instructions d'une même fonction logicielle et étant calculée en résolvant un problème de sous-graphes avec contraintes sur le degré, chaque chaîne critique correspondant à un sous-graphe, le nombre d'instructions incluses dans chaque chaîne critique étant inférieur ou égal à un nombre maximal prédéfini, et un paramètre d'optimisation étant le nombre de relations entre les instructions de la chaîne critique respective, ledit nombre de relations correspondant à un nombre d'arcs dans le sous-graphe associé ; et
- un module de recherche (46) configuré pour rechercher une ou plusieurs anomalie(s) temporelle(s) à partir de chaîne(s) critique(s) d'instructions déterminée(s) via la deuxième structure de modélisation.

**Patentansprüche**

1. Verfahren zur Überwachung eines ausführbaren Codes, der geeignet ist, um auf einer Rechnerplattform ausgeführt zu werden, wobei der ausführbare Code eine Sequenz von Softwareanweisungen umfasst,
wobei das Verfahren von einem elektronischen Überwachungssystem implementiert wird und umfassend die folgenden Schritte:

- Erfassen (100) der Sequenz von Softwareanweisungen;
- Erzeugen (110) einer ersten Struktur zum Modellieren eines Ausführungspfads der Anweisungssequenz, wobei die erste Struktur anhand der Anweisungssequenz erzeugt wird und eine Vielzahl von ersten Datengruppen umfasst, die jeweils mit einer entsprechenden Softwareanweisung assoziiert sind; wobei jede erste Gruppe eine Kennung einer vorherigen Anweisung und eine Kennung einer nachfolgenden Anweisung enthält;
- Berechnen (120) einer zweiten Struktur zum Modellieren einer Funktionsweise der Anweisungssequenz, die zweite Struktur umfassend eine Vielzahl von zweiten Datengruppen, die jeweils mit einer entsprechenden Softwareanweisung assoziiert sind; jede zweite Gruppe umfassend einen Indikator für die mögliche Zugehörigkeit zu einer kritischen Kette von Anweisungen und im Falle der Zugehörigkeit zu einer jeweiligen kritischen Kette eine Kennung einer anfänglichen Anweisung der kritischen Kette; wobei die zweite Struktur anhand der ersten Struktur erzeugt wird, indem die ersten Gruppen der ersten Struktur nacheinander durchlaufen werden; eine jeweilige kritische Kette den Anweisungen derselben Softwarefunktion entspricht und durch Lösen eines Subgraphenproblems mit Gradbeschränkungen berechnet wird, jede kritische Kette einem Subgraphen entspricht, wobei die Anzahl der in jeder kritischen Kette beinhalteten Anweisungen kleiner als oder gleich wie eine vordefinierte maximale Anzahl ist, und wobei ein Optimierungsparameter die Anzahl der Beziehungen zwischen den Anweisungen in der jeweiligen kritischen Kette ist, wobei die Anzahl der Beziehungen einer Anzahl von Bögen in dem assoziierten Subgraphen entspricht; und
- Suchen nach temporären Anomalien anhand von kritischen Ketten von Anweisungen, die über die zweite Modellierungsstruktur bestimmt werden.

2. Verfahren nach Anspruch 1, wobei in dem Berechnungsschritt für jede Softwareanweisung, die zu einer jeweiligen kritischen Kette gehört, jede zweite Gruppe ferner ein Vorkontextfeld und ein Nachkontextfeld umfasst; wobei das Vorkontextfeld, das die Kennung jeder Anweisung beinhaltet, die der Anweisung vorausgeht, die mit der zweiten Gruppe assoziiert ist und nicht zu der kritischen Kette gehört, zu der die Anweisung gehört, und wobei das Nachkontextfeld die Kennung jeder Anweisung beinhaltet, die auf die Anweisung folgt, die mit der zweiten Gruppe assoziiert ist und nicht zu der kritischen Kette gehört, zu der die Anweisung gehört.

3. Verfahren nach Anspruch 2, wobei in dem Berechnungsschritt ein Umfangsfeld für jede jeweilige kritische Kette von Anweisungen in der zweiten Modellierungsstruktur hinzugefügt wird, wobei das Umfangsfeld eine Anzahl von Speicherzugriffen seitens aller Befehle der kritischen Kette beinhaltet.

4. Verfahren nach Anspruch 2 oder 3, wobei in dem Berechnungsschritt eine Vorkontextvariable und eine Nachkontextvariable für jede jeweilige kritische Kette von Anweisungen in der zweiten Modellierungsstruktur hinzugefügt werden, wobei die Vorkontextvariable gleich wie die häufigste Kennung unter den in den Vortextfeldern enthaltenen Anweisungskennungen für die genannte kritische Zeichenkette ist, und wobei die Postkontextvariable gleich wie die häufigste Kennung unter den in den Postkontextfeldern enthaltenen Anweisungskennungen für die genannte kritische Zeichenkette ist.

5. Verfahren nach einem der vorherigen Ansprüche, wobei jede erste Gruppe ferner eine zeitliche Quantifizierung einer Ausführung der jeweiligen Softwareanweisung umfasst, und jede zweite Gruppe ferner mindestens eine zeitliche Quantisierung eines Ausführungspfads der Sequenz bis zu der jeweiligen Anweisung umfasst; die zeitliche Quantifizierung der Ausführung der jeweiligen Softwareanweisung vorzugsweise eine Anzahl von Taktzyklen für die genannte Ausführung ist.

6. Verfahren nach den Ansprüchen 2 und 5, wobei jede zeitliche Quantisierung eines Ausführungspfads bis zu der jeweiligen Softwareanweisung aus dem Vorkontextfeld für diese Anweisung und den zeitlichen Quantisierungen einer Ausführung für diese jeweilige Anweisung und für die in dem Vorkontextfeld identifizierten Anweisungen berechnet wird.

7. Verfahren nach Anspruch 5 oder 6, wobei das Verfahren ferner einen Schritt eines Propagierens von zeitlichen Quantisierungsdaten von einer vorherigen kritischen Kette von Anweisungen zu einer aktuellen kritischen Kette von Anweisungen umfasst, wobei die mit der aktuellen kritischen Kette assoziierten zeitlichen Quantisierungen anhand der mit der vorherigen kritischen Kette assoziierten zeitlichen Quantisierungen bestimmt werden.

8. Verfahren nach Anspruch 7, wobei in dem Suchschritt eine Zeitanomalie im Falle einer Inkonsistenz zwischen den zeitlichen Quantisierungen, die mit der aktuellen kritischen Kette assoziiert sind, und jenen, die mit der vorherigen kritischen Kette assoziiert sind, erkannt wird.

9. Verfahren nach einem der Ansprüche 5 bis 8, wobei eine erste zeitliche Quantisierung, die in der zweiten Gruppe beinhaltet ist, eine zeitliche Quantisierung eines kürzesten Ausführungspfads zwischen einer Anfangsanweisung der Sequenz und der jeweiligen Anweisung ist; und eine zweite zeitliche Quantisierunge, die in der zweiten Gruppe beinhaltet ist, eine zeitliche Quantisierung eines längsten Ausführungspfads zwischen der ursprünglichen Anweisung und der jeweiligen Anweisung ist.

10. Verfahren nach einem der vorherigen Ansprüche, wobei die Rechnerplattform mehrere Anweisungsausführungseinheiten (FU1, FU2) umfasst, und jede erste Gruppe ferner eine Kennung der Ausführungseinheit (FU1, FU2) umfasst, die mit der jeweiligen Softwareanweisung assoziiert ist.

11. Verfahren nach einem der vorherigen Ansprüche, wobei jede erste Gruppe ferner Informationen über eine mögliche Abhängigkeit von anderen Anweisungen umfasst, wie beispielsweise eine Registerkennung, die mit den anderen Anweisungen gemeinsam ist, und/oder eine Kennung eines Speicherbereichs, der mit den anderen Anweisungen gemeinsam ist.

12. Verfahren nach einem der vorherigen Ansprüche, wobei die Software-Anweisungssequenz eine Sequenz von Anweisungen ist, die in Maschinensprache ausgedrückt sind und direkt von der Rechnerplattform interpretierbar sind.

13. Rechnerprogramm, umfassend Softwareanweisungen, die, wenn sie von einem Rechner ausgeführt werden, ein Verfahren nach einem der vorherigen Ansprüche durchführen.

14. Elektronische Vorrichtung (30) zur Überwachung eines ausführbaren Codes (32), der geeignet ist, auf einer Rechnerplattform (34) ausgeführt zu werden, wobei der ausführbare Code (32) eine Sequenz von Softwareanweisungen umfasst, die Vorrichtung umfassend:

    - ein Erfassungsmodul (40), das konfiguriert ist, um die Sequenz von Softwareanweisungen zu erfassen;
    - ein Erzeugungsmodul (42), das konfiguriert ist, um eine erste Modellierungsstruktur für einen Ausführungspfad der Befehlssequenz zu erzeugen, wobei die erste Struktur anhand der Anweisungssequenz erzeugt wird und eine Vielzahl von ersten Datengruppen umfasst, die jeweils mit einer entsprechenden Softwareanweisung assoziiert sind; wobei jede erste Gruppe eine Kennung einer vorherigen Anweisung und eine Kennung einer nachfolgenden Anweisung enthält;
    - ein Rechenmodul (44), das konfiguriert ist, um eine zweite Struktur zum Modellieren einer Funktionsweise der Anweisungssequenz zu berechnen, die zweite Struktur umfassend eine Vielzahl von zweiten Datengruppen, die jeweils mit einer entsprechenden Softwareanweisung assoziiert sind; jede zweite Gruppe umfassend einen Indikator für die mögliche Zugehörigkeit zu einer kritischen Kette von Anweisungen und im Falle der Zugehörigkeit zu einer jeweiligen kritischen Kette eine Kennung einer anfänglichen Anweisung der kritischen Kette; wobei die zweite Struktur anhand der ersten Struktur erzeugt wird, indem die ersten Gruppen der ersten Struktur nacheinander durchlaufen werden; eine jeweilige kritische Kette den Anweisungen derselben Softwarefunktion entspricht und durch Lösen eines Subgraphenproblems mit Gradbeschränkungen berechnet wird, jede kritische Kette einem Subgraphen entspricht, wobei die Anzahl der in jeder kritischen Kette beinhalteten Anweisungen kleiner als oder gleich wie eine vordefinierte maximale Anzahl ist, und wobei ein Optimierungsparameter die Anzahl der Beziehungen zwischen den Anweisungen in der jeweiligen kritischen Kette ist, wobei die Anzahl der Beziehungen einer Anzahl von Bögen in dem assoziierten Subgraphen entspricht; und
    - ein Suchmodul (46), das konfiguriert ist, um anhand von kritischen Ketten von Anweisungen, die über die zweite Modellierungsstruktur bestimmt werden, nach einer oder mehreren zeitlichen Anomalien zu suchen.

## Claims

1. A method for monitoring an executable code adapted to be executed on a computer platform, the executable code comprising a sequence of software instructions,
   the method being implemented by an electronic monitoring device and comprising the following steps:

    - acquiring (100) the sequence of software instructions;
    - generating (100) a first modeling structure of an execution path of the sequence of instructions, with the first structure generated from the sequence of instructions and including a plurality of first groups of data, each first group being associated with a respective software instruction and including an identifier of a previous instruction and an identifier of a following instruction;

- calculating (120) a second modelling structure of an operation of the sequence of instructions, the second structure comprising a plurality of second groups of data, each second group being associated with a respective software instruction and comprising an indicator of possible belonging to a critical chain of instructions, and in the case of belonging to a respective critical chain, an identifier of an initial instruction of said critical chain; the second structure being created from the first structure by successively going through the first groups of the first structure; a respective critical chain corresponding to instructions of a same software function, being computed by solving a subgraph problem with degree constraints, each critical chain corresponding to a subgraph, the number of instructions included in each critical chain being less than or equal to a predefined maximum number, and an optimization parameter being the number of relationships between the instructions of the respective critical chain, said number of relationships corresponding to a number of arcs in the related subgraph; and

- searching for runtime anomaly/anomalies from critical chain(s) of instructions determined via the second modeling structure.

2. The method according to claim 1, wherein in the calculation step, for each software instruction belonging to a respective critical chain, each second group further comprises a pre-context and a post-context field, with the pre-context field including the identifier of each instruction preceding the instruction associated with said second group and not belonging to the critical chain of which said instruction is a part, and the post-context field including the identifier of each instruction succeeding the instruction associated with said second group and not belonging to the critical chain of which said instruction is part.

3. The method according to claim 2, wherein in the calculation step, a scope field is added for each respective critical chain of instructions in the second modeling structure, the scope field including a number of memory accesses from all instructions in said critical chain.

4. The method according to claim 2 or 3, wherein in the calculation step, a pre-context variable and a post-context variable are added for each respective critical chain of instructions in the second modeling structure, the pre-context variable being equal to the most frequent of the instruction identifiers contained in the pre-context fields for said critical chain, and the post-context variable being equal to the most frequent of the instruction identifiers contained in the post-context fields for said critical chain.

5. The method according to any one of the preceding claims, wherein each first group further comprises a runtime quantification of an execution of the respective software instruction, and each second group further comprises at least a runtime quantification of an execution path of the sequence to said respective instruction;
the runtime quantification of the execution of the respective software instruction preferably being a number of clock cycles for said execution.

6. The method according to claims 2 and 5, wherein each runtime quantification of an execution path to the respective software instruction is calculated from the pre-context field for said instruction and the execution runtime quantifications for said respective instruction and for the instructions identified in the pre-context field.

7. The method according to claim 5 or 6, wherein the method further comprises a step of propagating runtime quantification data from a previous critical chain of instructions to a current critical chain of instructions, the runtime quantifications associated with the current critical chain being determined from those associated with the previous critical chain.

8. The method according to claim 7, wherein in the search step, a runtime anomaly is detected if there is an inconsistency between the runtime quantifications associated with the current critical chain and those associated with the previous critical chain.

9. The method according to any one of claims 5 to 8, wherein a first runtime quantification included in the second group is a runtime quantification of a shortest execution path between an initial instruction of the sequence and the respective instruction; and a second runtime quantification included in the second group is a runtime quantification of a longest execution path between said initial instruction and the respective instruction.

10. The method according to any one of the preceding claims, wherein the computer platform comprises a plurality of instruction(s) execution units (FU1, FU2), and each first group further comprises an identifier of the execution unit (FU1, FU2) associated with the respective software instruction.

11. The method according to any one of the preceding claims, wherein each first group further comprises information on possible dependency with other instructions, such as a common register identifier with said other instructions and/or a common memory area identifier with said other instructions.

12. The method according to any of the preceding claims, wherein the sequence of software instructions is a sequence of instructions expressed in machine language, directly interpretable by the computer platform.

13. A computer program comprising software instructions that implement a method according to any of the preceding claims when executed by a computer.

14. An electronic device (30) for monitoring an executable code (32) adapted to be executed on a computer platform (34), the executable code (32) comprising a sequence of software instructions, the device (30) comprising:

- an acquisition module (40) configured to acquire the sequence of software instructions;
- a generation module (42) configured to generate a first modeling structure of an execution path of the sequence of instructions, the first structure being generated from the sequence of instructions and including a plurality of first groups of data, each associated with a respective software instruction; each first group including an identifier of a previous instruction and an identifier of a following instruction;
- a calculation module (44) configured to calculate a second structure for modelling an operation of the sequence of instructions, the second structure comprising a plurality of second data groups, each associated with a respective software instruction; each second group comprising an indicator of possible belonging to a critical chain of instructions, and in the case of belonging to a respective critical chain, an identifier of an initial instruction of said critical chain; the second structure being created from the first structure by successively going through the first groups of the first structure; a respective critical chain corresponding to instructions of a same software function and being computed by solving a subgraph problem with degree constraints, each critical chain corresponding to a subgraph, the number of instructions included in each critical chain being less than or equal to a predefined maximum number, and an optimization parameter being the number of relationships between the instructions of the respective critical chain, said number of relationships corresponding to a number of arcs in the related subgraph; and
- a search module (46) configured to search for one or more runtime anomalies from critical chains of instructions determined via the second modeling structure.

## FIG.1

FIG.2

FIG.3

FIG.4

Acquisition d'une séquence d'instructions logicielles ⟋100

Génération d'une première structure de modélisation d'un chemin d'exécution de la séquence d'instructions ⟋110

Calcul d'une deuxième structure de modélisation d'un fonctionnement de la séquence d'instructions ⟋120

Propagation de données de quantification temporelle d'une chaîne critique courante d'instructions à une chaîne critique suivante ⟋130

Recherche d'anomalie(s) temporelle(s) à partir de chaîne(s) critique(s) déterminée(s) via la deuxième structure ⟋140

## FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE M. ASAVOAE** ; **B. BEN HEDIA** ; **M. JAN**. Formal Executable Models for Automatic Detection of Timing Anomalies. *WCET*, 2018
- **DE LU et al.** Data-driven Anomaly Detection with Timing Features for Embedded Systems. *Virtual simple architecture (VISA): exceeding the complexity limit in safe real-time systems*
- **DE ANANTARAMAN et al.** *An efficient reduction technique for degree-constrained subgraph and bidirected network flow problems*
- **Y.SHILOACH**. *Another look at the degree constrained subgraph problem*, 1981
- **O. AMINI et al.** *On the approximability of some degree-constrained subgraph problems*, 2012
- **E. CLARKE et al.** Model checking (second edition). MIT Press, 2018
- **M. ASAVOAE et al.** Formal executable models for automatic detection of timing anomalies. *WCET*, 2018